# EUROPÄISCHE PATENTSCHRIFT

(11) **EP 2 228 193 B1**
(45) Veröffentlichungstag und Bekanntmachung des Hinweises auf die Patenterteilung: **08.08.2012**
(21) Anmeldenummer: 09177208.7
(22) Anmeldetag: 26.11.2009
(51) Int. Cl.: B29C 45/27

(54) **Düsenvorrichtung**
Nozzle device
Dispositif de buse

(30) Priorität: 13.03.2009 DE 102009012659; 08.04.2009 DE 102009016501
(43) Veröffentlichungstag der Anmeldung: 15.09.2010
(73) Patentinhaber: Schreck, Hans, 35099 Burgwald-Bottendorf (DE)
(72) Erfinder: Schreck, Hans, 35099 Burgwald-Bottendorf (DE)
(74) Vertreter: Tappe, Hartmut

(56) Entgegenhaltungen:
- US-A1- 2005 196 486

## Beschreibung

Die Erfindung betrifft eine Vorrichtung zum Anspritzen von Kunststoffformteilen mit den Merkmalen des Oberbegriffs des Anspruchs 1.

Derartige, aus dem Stand der Technik bekannte Düsenvorrichtungen bzw. Werkzeuganordnungen kommen regelmäßig dann zum Einsatz, wenn eine Werkzeuganordnung, bedingt durch ihren Aufbau, relativ aufwendig montier- bzw. demontierbar ist. Dies ist insbesondere dann der Fall, wenn die Düsenvorrichtung eine Mehrspitzendüse ist, bei der eine Mehrzahl von Formkavitäten seitlich neben der Düsenvorrichtung in einem Formwerkzeug angeordnet ist. Bei derartigen Düsenvorrichtungen verzweigt eine zentrale Zuführleitung in einem Düsenkörper sternförmig in Einspritzkanäle zum seitlichen Anspritzen der Formkavitäten, wobei in den Einspritzkanälen Düsenspitzen angeordnet sind, die den Düsenkörper überragen und in das Formwerkzeug eingreifen. Der Düsenkörper kann daher nicht ohne weiters aus dem Formwerkzeug entnommen werden. So muss das Formwerkzeug notwendigerweise mehrteilig ausgeführt sein, oder der Düsenkörper muss so ausgebildet sein, dass er eine vom Formwerkzeug unabhängige Montage bzw. Demontage der Düsenspitzen ermöglicht.

Bei den erstgenannten Düsenkörpern ist es aus dem Stand der Technik bekannt, diese mehrteilig auszubilden, so dass das Formwerkzeug nicht demontiert werden muss, wenn es beispielsweise für Reinigungszwecke von einer die Düsenvorrichtung halternden Aufnahmeplatte der Werkzeuganordnung entfernt werden soll. Die bekannten Düsenvorrichtungen weisen daher einen ersten und einen zweiten Düsenkörper auf, welche mittels eines Verbindungselements so verbunden sind, dass sie in Art einer Rohrleitungskupplung ineinander geschoben bzw. auseinander gezogen werden können. Dadurch kann unter anderem auch gewährleistet werden, dass die Düsenspitzen immer mit den Einspritzkanälen der Formkavitäten fluchten, da eine Längenausdehnung infolge einer Temperierung der Düsenvorrichtung kompensiert werden kann. Da das Schmelzmaterial unter hohem Druck den Formkavitäten zugeführt wird, ist in einem Verbindungsbereich zwischen dem Verbindungselement und dem ersten Düsenkörper eine flexible Ringdichtung vorgesehen, die an einer Stirnseite des Verbindungselements angeordnet ist und an einer gegenüberliegenden Stirnseite des ersten Düsenkörpers abdichtend anliegt. Das Dichtungselement überbrückt einen axialen Dichtungsspalt, der im Rahmen der Flexibilität des Dichtungselements gegebenen Längsbeweglichkeit der beiden Düsenkörper eine Kompensation der Längenausdehnung ermöglicht.

Nachteilig ist hier, dass nur geringfügige Längenausdehnungen kompensiert werden können, da die Dichtigkeit der Verbindung von der Größe des Dichtspalts und des darin angeordneten Dichtungselements abhängig ist. Auch muss bei einer Montage immer auf einen korrekten Sitz des Dichtelements bzw. auf mögliche Beschädigungen desselben geachtet werden. Um eventuelle Undichtigkeiten auszuschließen, empfiehlt es sich daher das Dichtelement bei der Montage zu erneuern. Im Übrigen bedarf es bei der vorbeschriebenen Düsenvorrichtung einer Demontage bzw. Montage des Formwerkzeugs, da hier ein Auswechseln von Düsenspitzen unabhängig vom Formwerkzeug nicht vorgesehen ist.

Aus der US 2005/0196486 A1 ist eine Düsenvorrichtung bekannt, die einen ersten und einen zweiten Düsenkörper sowie ein Verbindungselement zur Verbindung der Düsenkörper umfasst. Das Verbindungselement ist in den zweiten Düsenkörper eingeschraubt und in dem ersten Düsenkörper längsbeweglich unter Ausbildung einer Dichtung gelagert. Eine Abdichtung von Verbindungselement und dem ersten Düsenkörper in einem Verbindungsbereich kann mittels einer Ringdichtung oder durch eine Dichtkraft in axialer Richtung, hervorgerufen durch eine thermische Ausdehnung der Düsenkörper, erfolgen.

Die US 2009/0051080 A1 beschreibt ebenfalls eine Düsenvorrichtung mit einem ersten und einem zweiten Düsenkörper und einem Verbindungselement, wobei auch hier das Verbindungselement in den zweiten Düsenkörper eingeschraubt ist. Ein Verbindungsbereich ist unmittelbar innerhalb des ersten Düsenkörpers im Bereich eines Schmelzeverteilers ausgebildet. Das Verbindungselement bildet eine radiale Dichtungswandung aus, die eine Abdichtung zwischen einer radialen Innenfläche des ersten Düsenkörpers und einem Umfangsdurchmesser des Verbindungselements bewirken kann.

Der vorliegenden Erfindung liegt die Aufgabe zugrunde, eine Düsenvorrichtung vorzuschlagen, die eine Baugröße des ersten Düsenkörpers verringert.

Diese Aufgabe wird durch eine Düsenvorrichtung mit den Merkmalen des Anspruchs 1 sowie des Anspruchs 3 gelöst.

Die erfindungsgemäße Vorrichtung zum Anspritzen von Kunststoffformteilen, insbesondere eine Düsenvorrichtung die in ein Formwerkzeug einsetzbar ist, umfasst einen ersten und zweiten Düsenkörper sowie ein Verbindungselement zur Verbindung der Düsenkörper, wobei die Düsenkörper und das Verbindungselement jeweils eine Zuführleitung für Schmelzmaterial aufweisen, derart, dass das Schmelzmaterial vom zweiten Düsenkörper über das Verbindungselement in den ersten Düsenkörper förderbar ist, wobei der erste Düsenkörper zumindest einen Zuführkanal zum Einspritzen des Schmelzmaterials in eine Formkavität des Formwerkzeugs aufweist, und wobei das Verbindungselement so mit den Düsenkörpern verbunden ist, dass eine Relativbewegung der Düsenkörper in Richtung einer Längsachse der Düsenkörper ermöglicht wird, wobei ein Verbindungsbereich zwischen einem Düsenkörper und dem Verbindungselement so ausgebildet ist, dass der Verbindungsbereich selbstdichtend ist.

Insbesondere durch die selbstdichtende Ausbildung des Verbindungsbereiches kann auf die Verwendung eines Dichtungselements mit den aus dem Stand der Technik bekannten Nachteilen verzichtet werden. So werden auch vergleichsweise große, durch Temperatureinwirkung bedingte Längenänderungen innerhalb des Verbindungsbereichs kompensiert, ohne dass ein genauer Sitz eines Dichtungselements berücksichtigt werden müsste. Demnach sind Längenänderungen grundsätzlich nur durch eine Länge des Verbindungsbereiches beschränkt. Auch bedarf es keiner besonderen Berücksichtigung möglicher Fertigungs- und Montageabweichungen die Längen des Verbindungselements und der Düsenkörper betreffend. Insgesamt wird die Montage bzw. Demontage der Düsenvorrichtung bzw. einer Werkzeuganordnung vereinfacht, da kein Dichtungselement verwendet werden muss.

Wenn das Verbindungselement einstückig ausgebildet ist, kann das Verbindungselement besonders einfach und kostengünstig hergestellt werden. Auch kann so eine Bauteilanzahl der Düsenvorrichtung verringert werden, was eine Montage bzw. Demontage weiter vereinfacht.

Nach der Erfindung ist fest mit dem ersten Düsenkörper verbunden. Hieraus ergibt sich der Vorteil, dass eine Längenausdehnung des Verbindungselements nicht im Bereich des ersten Düsenkörpers erfolgt, sondern am zweiten Düsenkörper. Eine Baugröße des ersten Düsenkörpers kann so verringert werden, da hier kein selbstdichtender Verbindungsbereich ausgebildet werden muss. Dadurch, dass dann der selbstdichtende Verbindungsbereich im zweiten Düsenkörper ausgebildet ist, ist der selbstdichtende Verbindungsbereich weniger hohen Temperaturbeanspruchungen ausgesetzt, da der Verbindungsbereich von den Heizeinrichtungen der Düsenvorrichtung beabstandet angeordnet werden kann.

Erfindungsgemäß ist das Verbindungselement von dem ersten Düsenkörper ausgebildet. Das heißt es kann auf eine gesonderte Ausbildung eines Verbindungselements verzichtet werden, da dann beide Düsenkörper unmittelbar miteinander verbunden sein können, derart, dass der Verbindungsbereich zwischen den beiden Düsenkörpern ausgebildet ist. Hierdurch kann der Aufbau der Düsenvorrichtung noch weiter vereinfacht werden.

Nach der Erfindung ist der Verbindungsbereich selbstdichtend ausgebildet. Eine radiale Außenfläche des Verbindungselements und eine radiale Innenfläche eines der beiden Düsenkörper können eine Dichtung ausbilden. Das heißt das Verbindungselement und der betreffende Düsenkörper sind so ineinander gefügt, dass zwischen den radialen Oberflächen ein Ringspalt in Art einer Passung ausgebildet wird, der eine Bewegung in eine Längsrichtung ermöglichen und dennoch eine ausreichende Abdichtung des Verbindungsbereiches gewährleisten kann.

Erfindungsgemäß bildet das Verbindungselement eine radiale Dichtungswandung der Zuführleitung aus, die eine Dichtkraft auf die radiale Innenfläche des Düsenkörpers ausüben kann. In diesem Fall ist ein Ende oder ein Abschnitt des Verbindungselements so ausgebildet, dass eine dünne Wandung in Art einer Membran zwischen der Zuführleitung eines Düsenkörpers und einem Umfangsdurchmesser des Verbindungselements ausgebildet ist. Bei einer Förderung von Schmelzmaterial unter Druck kann sich der Umfangsdurchmesser derart aufweiten, dass eine Abdichtung zwischen der radialen Innenfläche bzw. einem Innendurchmesser des Düsenelements und dem Umfangsdurchmesser des Verbindungselements gebildet wird. Der selbstdichtende Verbindungsbereich kann sich somit hinsichtlich seiner Dichtwirkung an die jeweils in den Zuführleitungen herrschenden Druckverhältnisse anpassen. Vorraussetzung ist, dass mindestens in einem Abschnitt des Verbindungsbereiches die Zuführleitung des Verbindungselements relativ koaxial zu der Zuführleitung des Düsenkörpers verläuft.

Im Folgenden wird die Erfindung unter Bezugnahme auf die beigefügten Zeichnungen näher erläutert.

Es zeigen:
- **Fig. 1**: eine erste Ausführungsform einer Düsenvorrichtung nach dem Stand der Technik in einer Werkzeuganordnung in einer Längsschnittansicht;
- **Fig. 2**: eine schematische Unteransicht der Düsenvorrichtung aus **Fig. 1**;
- **Fig. 3**: eine zweite Ausführungsform einer Düsenvorrichtung nach dem Stand der Technik in einer Werkzeuganordnung in einer Längsschnittansicht;
- **Fig. 4**: eine dritte Ausführungsform einer Düsenvorrichtung nach dem Stand der Technik in einer Werkzeuganordnung in einer Längsschnittansicht;
- **Fig. 5**: eine vierte Ausführungsform einer Düsenvorrichtung in einer Unteransicht;
- **Fig. 6**: eine fünfte Ausführungsform einer Düsenvorrichtung in einer Unteransicht;
- **Fig.7**: eine sechste Ausführungsform einer Düsenvorrichtung nach dem Stand der Technik in einer Werkzeuganordnung in einer Längsschnittansicht;
- **Fig. 8**: eine siebte Ausführungsform einer Düsenvorrichtung nach dem Stand der Technik in einer Werkzeuganordnung in einer Längsschnittansicht;
- **Fig. 9**: eine achte Ausführungsform einer Düsenvorrichtung nach dem Stand der Technik in einer Werkzeuganordnung in einer Längsschnittansicht;
- **Fig. 10**: eine schematische Schnittansicht entlang einer Linie X-X aus **Fig. 9**;
- **Fig. 11**: eine neunte Ausführungsform einer Düsenvorrichtung nach dem Stand der Technik in einer Werkzeuganordnung in einer Längsschnittansicht;
- **Fig. 12**: eine schematische Schnittansicht entlang einer Linie XII-XII aus **Fig. 11**;
- **Fig. 13**: eine zehnte Ausführungsform einer Düsenvorrichtung in einer Unteransicht;
- **Fig. 14**: eine elfte Ausführungsform einer Düsenvorrichtung in einer Werkzeuganordnung in einer Längsschnittansicht;
- **Fig. 15**: die erste Ausführungsform einer Düsenvorrichtung in einer Teilansicht aus **Fig. 1**;
- **Fig. 16**: eine zwölfte Ausführungsform einer Düsenvorrichtung nach dem Stand der Technik in einer Werkzeuganordnung in einer Längsschnittansicht.

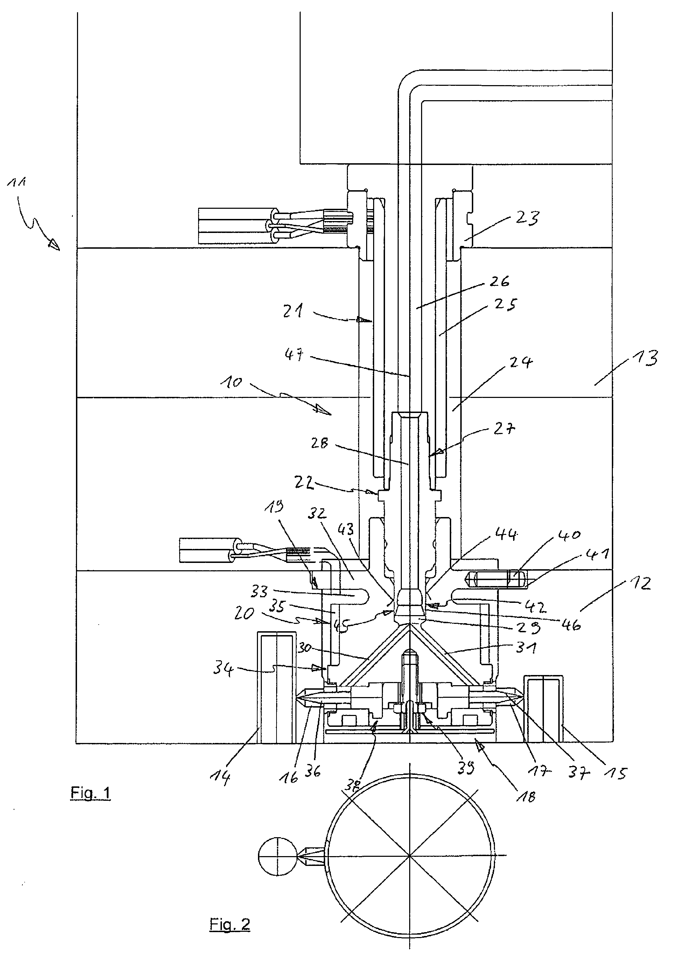

Eine Zusammenschau der **Fig. 1** und **2** zeigt eine Düsenvorrichtung 10 in einer Werkzeuganordnung 11, wobei die Werkzeuganordnung 11 die Düsenvorrichtung 10, eine Formplatte 12 eines hier nicht vollständig dargestellten Formwerkzeugs und eine Aufnahmeplatte 13 sowie weitere, hier nicht näher dargestellte Bauteile umfasst. In der Formplatte 12 sind Formkavitäten 14 und 15 mit Einspritzkanälen 16 bzw. 17 ausgebildet. Weiter ist in der Formplatte eine Düsenkörperaufnahme 18 mit einem Aufnahmeabsatz 19 ausgebildet.

Die Düsenvorrichtung 10 umfasst einen ersten Düsenkörper 20, einen zweiten Düsenkörper 21 sowie ein Verbindungselement 22. Der zweite Düsenkörper 21 ist weiter mittels eines Zentrierrings 23 in einer Durchgangsöffnung 24 der Aufnahmeplatte 13 gehaltert und weist ein Heizelement 25 sowie eine zentrale Zuführleitung 26 für hier nicht näher dargestelltes Schmelzmaterial auf. In den zweiten Düsenkörper 21 ist das Verbindungselement 22 mittels einer Gewindeverbindung 27 abdichtend eingeschraubt, wobei das Verbindungselement 22 eine an die Zuführleitung 26 anschließende Zuführleitung 28 ausbildet, die in eine Zuführleitung 29 des ersten Düsenkörpers 20 mündet. Die Zuführleitung 29 verzweigt in Zuführkanäle 30 und 31, die das Schmelzmaterial in die Einspritzkanäle 16 bzw. 17 leiten. Der erste Düsenkörper 20 bildet einen Bund 32 und eine über eine Ringnut 33 vom Bund 32 beabstandete Düsenkrone 34 mit einer Heizeinrichtung 35 aus. In der Düsenkrone 34 sind Düsenspitzen 36 und 37 eingesetzt, die über eine Düsenspitzenaufnahme 38 aus der Düsekrone 34 entfernt werden können und im vorliegenden Beispiel mit einer Arretiereinrichtung 39 gesichert sind. In den Bund 32 ist ein Stift 40 fest eingesetzt, der in eine Montageausnehmung 41 der Formplatte 12 eingreift und so die Düsenkrone 34 bzw. die Düsenspitzen 36 und 37 relativ zu den Einspritzkanälen 16 bzw. 17 in radialer Richtung positioniert. In axialer Richtung ist der erste Düsenkörper 20 mittels dem zwischen der Formplatte 12 und dem Aufnahmeabsatz 19 gehalterten Bund 32 in der geforderten axialen Position befestigt. Zwischen dem Verbindungselement 22 und dem ersten Düsenkörper 20 ist ein Verbindungsbereich 42 ausgebildet, der selbstdichtend ist. Eine radiale Außenfläche 43 des Verbindungselements 22 bildet zusammen mit einer radialen Innenfläche 44 des ersten Düsenkörpers 20 eine Dichtung 45 aus. Das Verbindungselement 22 bildet zur Unterstützung einer Dichtungswirkung im Verbindungsbereich 42 eine Dichtungswandung 46 der Zuführleitung 28 aus, die eine Dichtkraft auf die radiale Innenfläche 44 des ersten Düsenkörpers 20 ausübt, sofern in der Zuführleitung 28 bzw. 29 eine Druckerhöhung erfolgt. Die Dichtungswandung 46 wird dann so aufgeweitet, dass die radiale Außenfläche 43 an der radialen Innenfläche 44 der Zuführleitung 29 abdichtend anliegt, wobei der Verbindungsbereich 42 eine Relativbewegung des ersten Düsenkörpers 20, des zweiten Düsenkörpers 21 und des Verbindungselements 22 entlang einer Längsachse 47 der Düsenvorrichtung 10 ermöglicht, ohne dass ein Dichtungselement im Verbindungsbereich 42 angeordnet sein müsste.

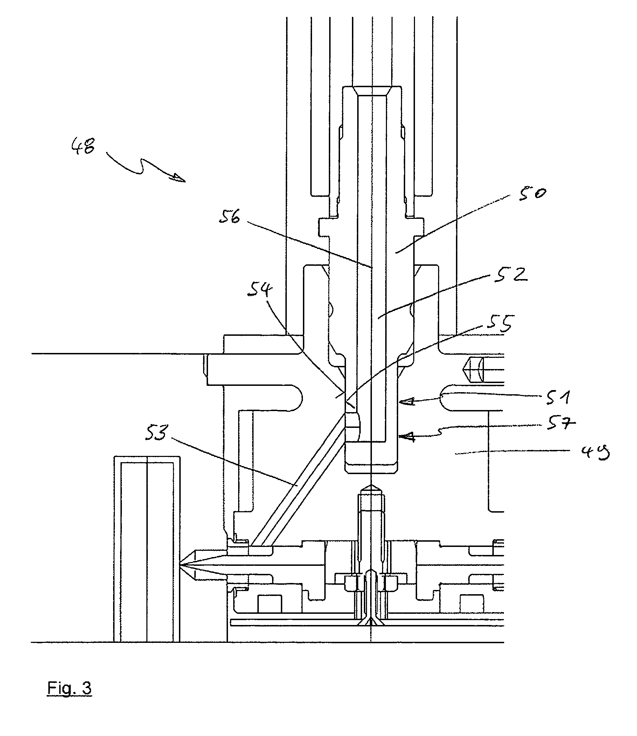

**Fig. 3** zeigt eine Düsenvorrichtung 48 mit einem ersten Düsenkörper 49 und einem Verbindungselement 50, bei der im Unterschied zu der Düsenvorrichtung aus **Fig. 1** bzw. **2** ein Verbindungsbereich 51 so ausgebildet ist, dass eine Zuführleitung 52 des Verbindungselements 50 in einen quer zur Zuführleitung 52 verlaufenden Zuführkanal 53 des ersten Düsenkörpers 49 abzweigt. Zwischen einer radialen Außenfläche 54 des Verbindungselement 50 und einer radialen Innenfläche 55 des ersten Düsenkörpers 49 wird hier ebenfalls eine in Richtung einer Längsachse 56 der Düsenvorrichtung 48 bewegliche Dichtung 57 ausgebildet, die kein weiteres Dichtelement benötigt.

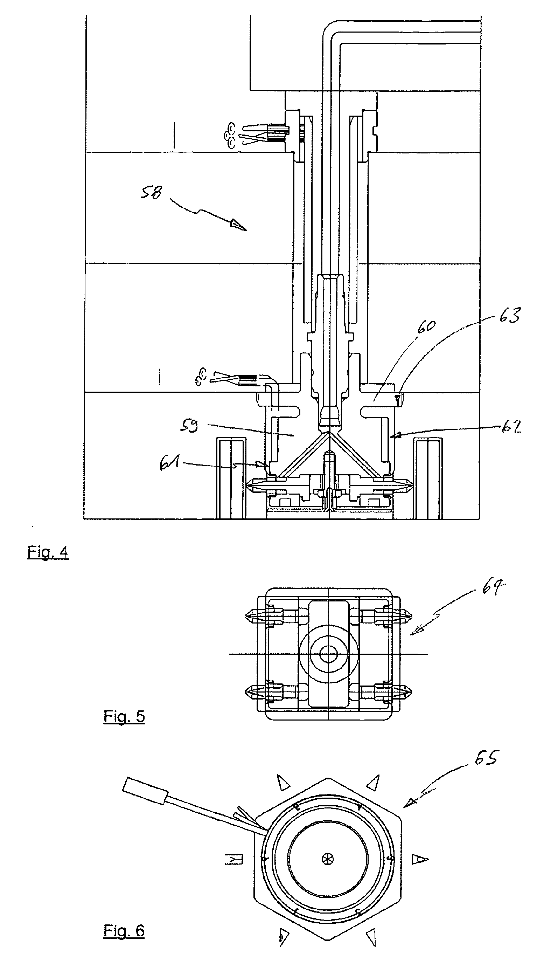

**Fig. 4** zeigt eine Düsenvorrichtung 58, bei der im Unterschied zu der Düsenvorrichtung aus **Fig. 1** bzw. **2** ein erster Düsekörper 59 mehreckig ausgebildet ist. Insbesondere ein Bund 60 des ersten Düsekörpers 59 ist mehreckig ausgebildet wobei eine Düsenkrone 61 im Wesentlichen mit einer kreisförmigen Querschnittsform ausgebildet ist. Der Bund 60 ist in eine Düsenkörperaufnahme 62 mit einem Aufnahmeabsatz 63 gegen diesen anliegend eingesetzt. Der Aufnahmeabsatz 63 bzw. die Düsenkörperaufnahme 62 ist im Bereich des Bunds 60 übereinstimmend mit dem Bund 60 ausgebildet, derart, dass eine Verdrehsicherung für den ersten Düsenkörper 59 gebildet wird.

Die **Fig. 5** und **6** zeigen Düsenvorrichtungen 64 und 65 in Unteransichten, wobei die Düsenvorrichtung 64 eine rechteckige Querschnittsform und die Düsenvorrichtung 65 eine sechseckige Querschnittsform aufweist.

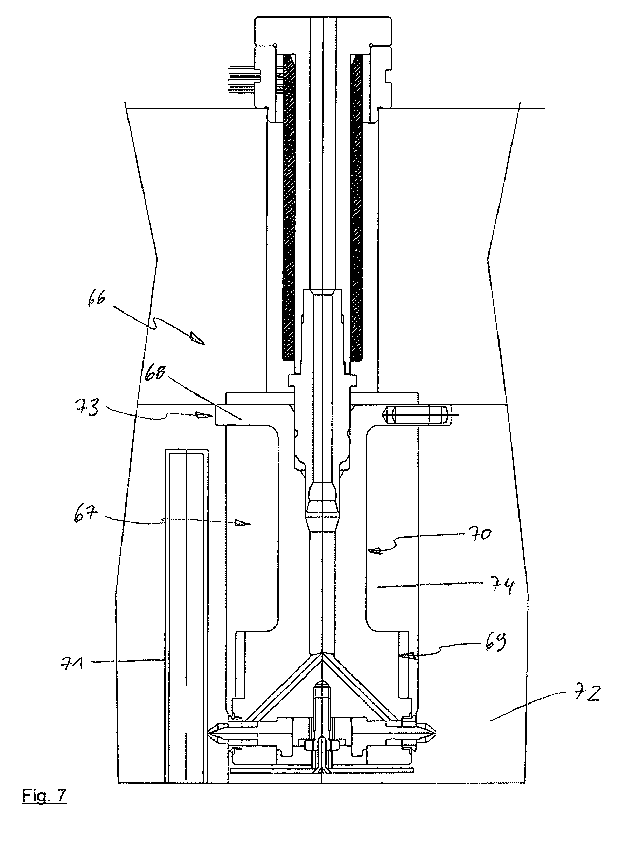

**Fig. 7** zeigt eine Düsenvorrichtung 66 mit einem ersten Düsenkörper 67 bei dem zwischen einem Bund 68 und einer Düsenkrone 69 ein vergleichsweise langer Verlängerungsabschnitt 70 ausgebildet ist. Dieser ermöglicht die Verwendung der Düsenvorrichtung 66 für vergleichsweise lange Formkavitäten 71 bzw. den Einsatz des ersten Düsenkörpers 67 in einer entsprechend dick ausgebildeten Formplatte 72. Im Unterschied zu dem ersten Düsenkörper aus **Fig. 1** bzw. **2** ist der Bund 68 an einem oberen Ende 73 des ersten Düsenkörpers 67 ausgebildet und ist durch eine um ein Vielfaches breitere Ringnut 74 von der Düsenkrone 69 beabstandet.

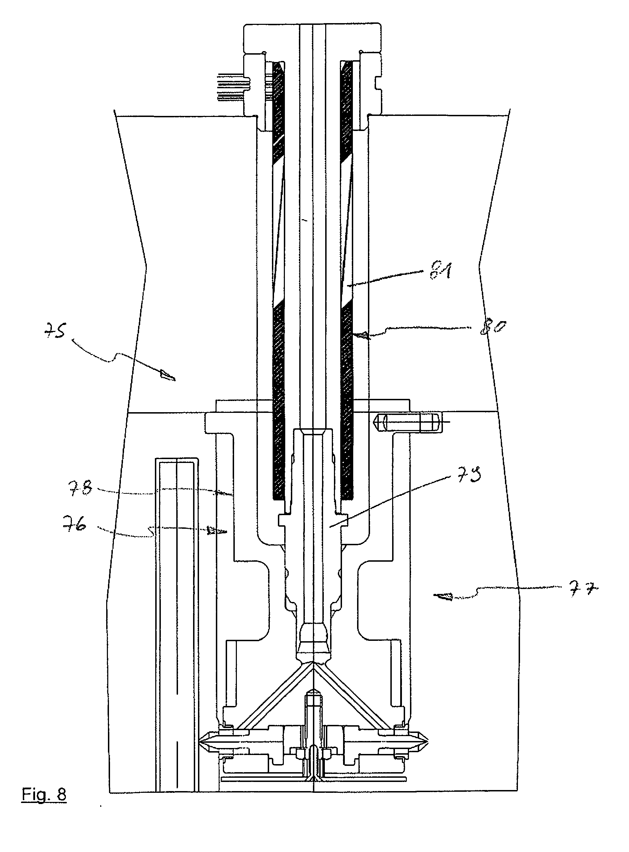

Eine weitere Düsenvorrichtung 75 ist **Fig. 8** zu entnehmen, wobei im Unterschied zu der Düsenvorrichtung aus **Fig. 7** ein Verlängerungsabschnitt 76 eines ersten Düsenkörpers 77 zumindest teilweise hülsenförmig ausgebildet ist. Wie aus der Darstellung hervorgeht, bildet der Verlängerungsabschnitt 76 eine Aufnahmehülse 78 aus, in der ein Verbindungselement 79 zusammen mit einem zweiten Düsenkörper 80 zumindest teilweise aufgenommen ist. So kann eine Heizeinrichtung 81 des zweiten Düsenkörpers 80 zumindest teilweise im ersten Düsenkörper 77 angeordnet werden.

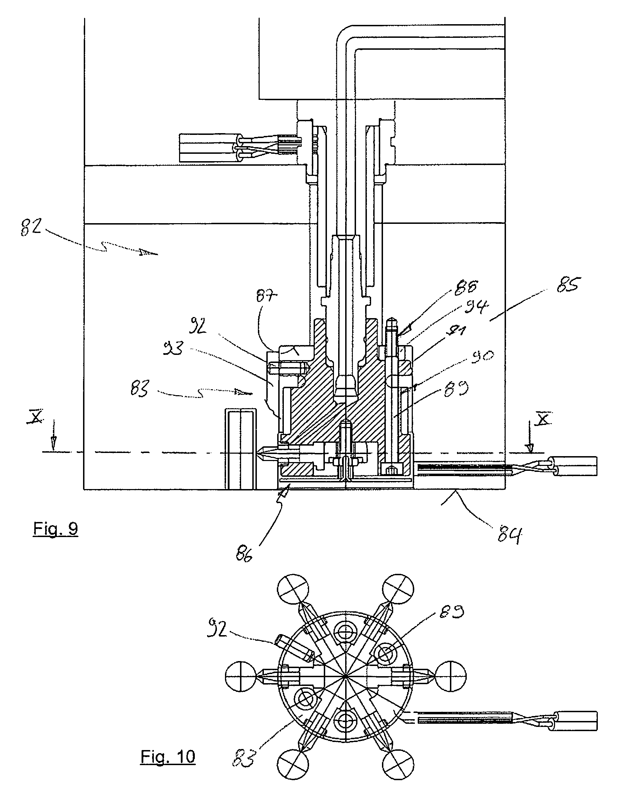

Eine Zusammenschau der **Fig. 9** und **10** zeigt eine Düsenvorrichtung 82 mit einem ersten Düsenkörper 83 der so ausgebildet ist, dass er von einer Frontseite 84 einer Formplatte 85 in eine Düsenkörperaufnahme 86 der Formplatte 85 einsetzbar ist. Die Düsenkörperaufnahme 86 bildet einen Aufnahmeabsatz 87 mit Gewindebohrungen 88 aus. In die Gewindebohrungen 88 sind Gewindebolzen 89 eingeschraubt, die in Durchgangsbohrungen 90 des ersten Düsenkörpers 83 eingesetzt sind. Weiter ist in einem Bund 91 des ersten Düsenkörpers 83 ein Stift 92 befestigt, der in einer nutförmigen Montageausnehmung 93 geführt ist. So wird eine lagerichtige Positionierung und Arretierung des ersten Düsenkörpers 83 in der Formplatte 85 ermöglicht. Eine Ausrichtung des ersten Düsenkörpers 83 in Längsrichtung relativ zur Formplatte 85 wird insbesondere durch die Verwendung von Abstandskörpern 94, welche zwischen dem Aufnahmeabsatz 87 und dem Bund 91 angeordnet sind, ermöglicht.

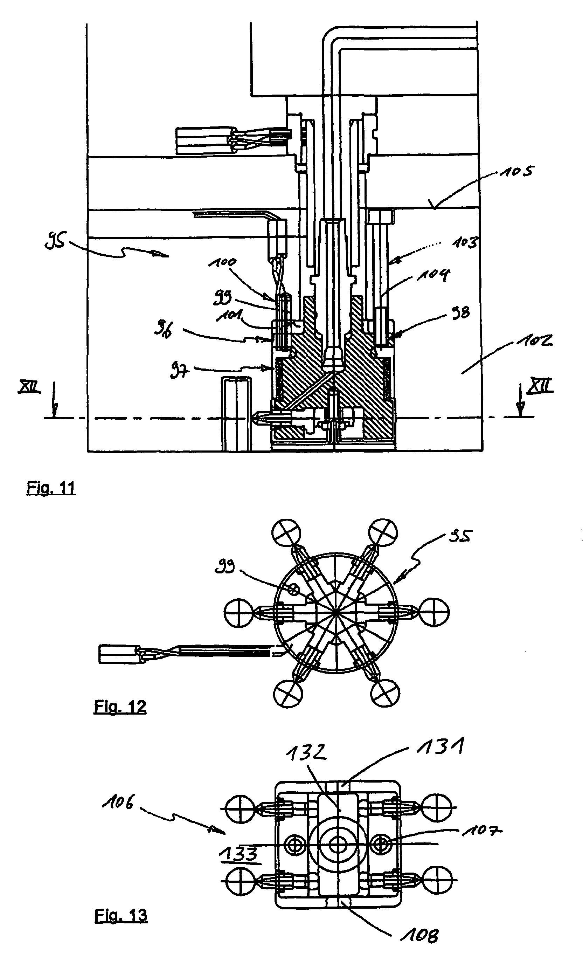

Die **Fig. 11** und **12** zeigen im Unterschied zur **Fig. 9** bzw. **10** eine Düsenvorrichtung 95, die in einem Bund 96 eines ersten Düsenkörpers 97 Gewindebohrungen 98 sowie einen in Längsrichtung orientierten Stift 99 aufweist. Der Stift 99 ist in eine Bohrung 100 in einem Aufnahmeabsatz 101 einer Formplatte 102 eingesetzt. Weiter sind in der Formplatte 102 Durchgangsbohrungen 103 ausgebildet, durch die Gewindebolzen 104 von einer Rückseite 105 der Formplatte 102 in die Gewindebohrungen 98 eingeschraubt sind.

**Fig. 13** zeigt eine Düsenvorrichtung 106 in einer Unteransicht, wobei die Düsenvorrichtung 106 einen rechteckigen Querschnitt aufweist und ebenfalls eine Befestigung mittels Gewindebolzen 107 ermöglicht. An der Düsenvorrichtung 106 sind weiter Passzylinder 131 vorgesehen, die einer Zentrierung bzw. Ausrichtung der Düsenvorrichtung 106 relativ zu einer Längsachse 132 einer hier nur teilweise dargestellten Formplatte 133 dienen.

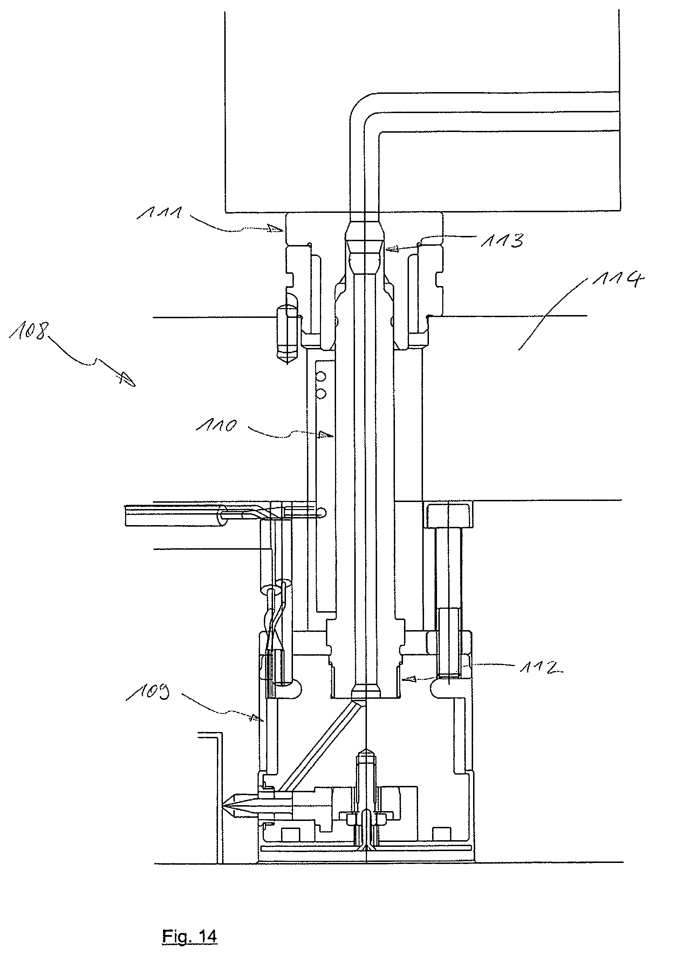

**Fig. 14** ist eine Düsenvorrichtung 108 zu entnehmen, welche aus einem ersten Düsenkörper 109, einem Verbindungselement 110 und einem zweiten Düsenkörper 111 gebildet ist. Im Unterschied zu den zuvor beschriebenen Düsenvorrichtungen ist das Verbindungselement 110 mittels einer Gewindeverbindung 112 in den ersten Düsenkörper 109 eingeschraubt und somit fest mit diesem verbunden. Ein selbstdichtender Verbindungsbereich 113 ist zwischen dem zweiten Düsenkörper 111 und dem Verbindungselement 110 ausgebildet. Der Verbindungsbereich 113 liegt damit oberhalb einer Aufnahmeplatte 114.

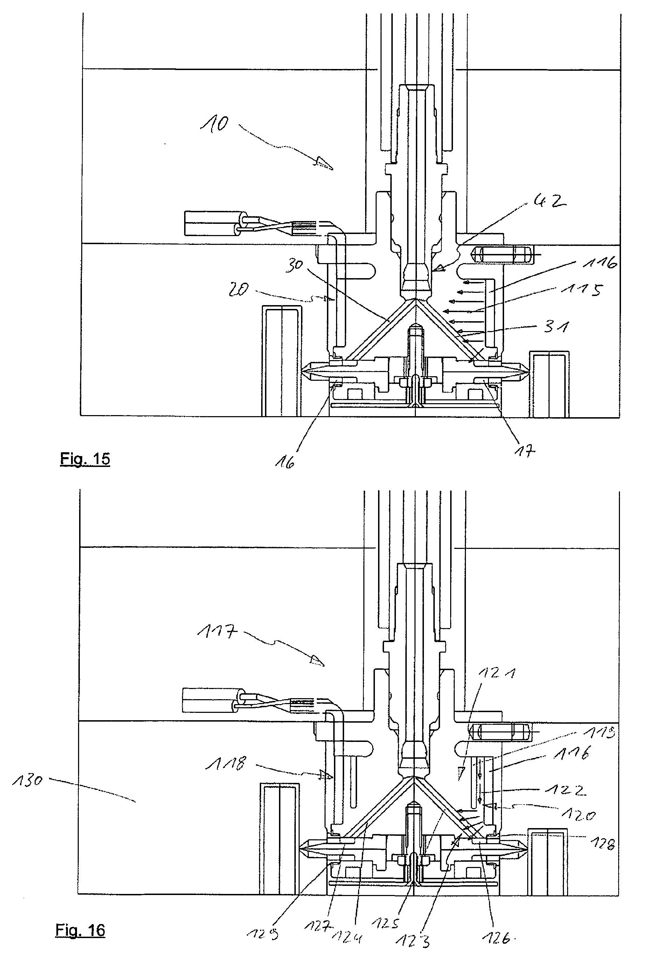

**Fig. 15** zeigt die Düsenvorrichtung 10 aus **Fig. 1**, wobei in dieser Darstellung Pfeile 115 einen Wärmestrom im ersten Düsenkörper 20, ausgehend von einer radial angeordneten Heizeinrichtung 116 darstellen. So werden die Zuführkanäle 30 und 31 im Wesentlichen in ihrer gesamten Länge sowie der Verbindungsbereich 42 gleichmäßig mit Wärmeenergie beaufschlagt. Ein Teil der Wärmeenergie gelangt auch zu den Einspritzkanälen 16 und 17, insbesondere im Bereich des ersten Düsenkörpers 20.

Im Unterschied zu der in **Fig. 15** gezeigten Düsenvorrichtung weist eine in **Fig. 16** dargestellten Düsenvorrichtung 117 einen ersten Düsenkörper 118 auf, in dem eine radiale Ausnehmung als ein Ringspalt 119 ausgebildet ist. Der Ringspalt 119 isoliert einen äußeren Bereich 120 von einem inneren Bereich 121 des ersten Düsenkörpers 118 so dass Wärmeenergie der Heizeinrichtung 116 im Wesentlichen entsprechend der Darstellung der Pfeile 122 im ersten Düsenkörper 118 übertragen wird. Die Wärmeenergie wird damit gezielt auf einen Übergangsbereich 123 von Zuführkanälen 124 und 125 zu Einspritzkanälen 126 bzw. 127 geleitet. Dadurch wird eine gezielte Temperierung von hier nicht dargestelltem Schmelzmaterial in dem Übergangsbereich 123 und insbesondere in den Einspritzkanälen 126 und 127 ermöglicht. Temperaturverluste in diesem Bereich durch Dichtungsringe 128 und 129, welche mit einer Formplatte 130 kontaktiert sind, können so wirkungsvoll ausgeglichen werden.

## Patentansprüche

1. Vorrichtung zum Anspritzen von Kunststoffformteilen, insbesondere eine Düsenvorrichtung (108) die in ein Formwerkzeug einsetzbar ist, wobei die Düsenvorrichtung einen ersten und zweiten Düsenkörper (109, 111) sowie ein Verbindungselement (110) zur Verbindung der Düsenkörper umfasst, wobei die Düsenkörper und das Verbindungselement jeweils eine Zuführleitung für Schmelzmaterial aufweisen, derart, dass das Schmelzmaterial vom zweiten Düsenkörper (111) über das Verbindungselement in den ersten Düsenkörper (109) förderbar ist, wobei der erste Düsenkörper zumindest einen Zuführkanal zum Einspritzen des Schmelzmaterials in eine Formkavität des Formwerkzeugs aufweist, und wobei das Verbindungselement so mit den Düsenkörpern verbunden ist, dass eine Relativbewegung der Düsenkörper in Richtung einer Längsachse der Düsenkörper ermöglicht wird, wobei ein Verbindungsbereich (113) zwischen einem Düsenkörper und dem Verbindungselement so ausgebildet ist, dass der Verbindungsbereich selbstdichtend ist, wobei das Verbindungselement (110) eine radiale Dichtungswandung der Zuführleitung ausbildet, die eine Dichtkraft auf die radiale Innenfläche des Düsenkörpers (111) ausüben kann, wobei die Dichtungswandung als eine dünne Wandung ausgebildet ist, die eine Dichtwirkung an die in der Zuführleitung herrschenden Druckverhältnisse anpassen kann, wobei die radiale Dichtungswandung in Art einer Membran zwischen der Zuführleitung des Düsenkörpers und einem Umfangsdurchmessers des Verbindungselements ausgebildet ist, wobei sich bei einer Förderung von Schmelzmaterial unter Druck der Umfangsdurchmesser derart aufweiten kann, dass eine Abdichtung zwischen der radialen Innenfläche des Düsenkörpers und dem Umfangsdurchmesser des Verbindungselements gebildet wird,
**dadurch gekennzeichnet,**
**dass** das Verbindungselement fest mit dem ersten Düsenkörper (109) verbunden ist, wobei der Verbindungsbereich (113) zwischen dem zweiten Düsenkörper (111) und dem Verbindungselement (110) ausgebildet ist.

2. Vorrichtung nach Anspruch 1,
**dadurch gekennzeichnet,**
**dass** das Verbindungselement (110) einstückig ausgebildet ist.

3. Vorrichtung zum Anspritzen von Kuriststoffformteilen, insbesondere eine Düsenvorrichtung (108) die in ein Formwerkzeug einsetzbar ist, wobei die Düsenvorrichtung einen ersten und zweiten Düsenkörper (109, 111) sowie ein Verbindungselement (110) zur Verbindung der Düsenkörper umfasst, wobei die Düsenkörper und das Verbindungselement jeweils eine Zuführleitung für Schmelzmaterial aufweisen, derart, dass das Schmelzmaterial vom zweiten Düsenkörper (111) über das Verbindungselement in den ersten Düsenkörper (109) förderbar ist, wobei der erste Düsenkörper zumindest einen Zuführkanal zum Einspritzen des Schmelzmaterials in eine Formkavität des Formwerkzeugs aufweist, und wobei das Verbindungselement so mit den Düsenkörpern verbunden ist, dass eine Relativbewegung der Düsenkörper in Richtung einer Längsachse der Düsenkörper ermöglicht wird, wobei ein Verbindungsbereich (113) zwischen einem Düsenkörper und dem Verbindungselement so ausgebildet ist, dass der Verbindungsbereich selbstdichtend ist, wobei das Verbindungselement (110) eine radiale Dichtungswandung der Zuführleitung ausbildet, die eine Dichtkraft auf die radiale Innenfläche des Düsenkörpers (111) ausüben kann, wobei die Dichtungswandung als eine dünne Wandung ausgebildet ist, die eine Dichtwirkung an die in der Zuführleitung herrschenden Druckverhältnisse anpassen kann, wobei die radiale Dichtungswandung in Art einer Membran zwischen der Zuführleitung des Düsenkörpers und einem Umfangsdurchmessers des Verbindungselements ausgebildet ist, wobei sich bei einer Förderung von Schmelzmaterial unter Druck der Umfangsdurchmesser derart aufweiten kann, dass eine Abdichtung zwischen der radialen Innenfläche des Düsenkörpers und dem Umfangsdurchmesser des Verbindungselements gebildet wird,
**dadurch gekennzeichnet,**
**dass** das Verbindungselement von dem ersten Düsenkörper ausgebildet ist, wobei der Verbindungsbereich (113) zwischen dem zweiten Düsenkörper (111) und dem Verbindungselement (110) ausgebildet ist.

4. Vorrichtung nach einem der vorangehenden Ansprüche,
**dadurch gekennzeichnet,**
**dass** im Verbindungsbereich (113) eine radiale Außenfläche des Verbindungselements (110) und eine radiale Innenfläche eines Düsenkörpers (111) eine Dichtung ausbilden.

## Claims

1. A device for injection-moulding plastic parts, particularly a nozzle device (108) that can be inserted into a moulding tool, wherein the nozzle device comprises a first and a second nozzle body (109, 111), as well as a connecting element (110) for connecting the nozzle bodies, wherein the nozzle bodies and the connecting element respectively feature a supply line for molten material such that the molten material can be transported from the second nozzle body (111) into the first nozzle body (109) via the connecting element, wherein the first nozzle body features at least one supply channel for injecting the molten material into a mould cavity of the moulding tool, wherein the connecting element is connected to the nozzle bodies in such a way that a relative movement of the nozzle bodies is possible in the direction of a longitudinal axis of the nozzle bodies, wherein a connecting region (113) between a nozzle body and the connecting element is realized in such a way that the connecting region is self-sealing, wherein the connecting element (110) forms a radial sealing wall of the supply line that can exert a sealing force upon the radially inner surface of the nozzle body (111), wherein the sealing wall is realized in the form of a thin wall that can adapt a sealing effect to the pressure conditions in the supply line, wherein the radial sealing wall is realized in the form of a membrane between the supply line of the nozzle body and a circumferential diameter of the connecting element, and wherein the circumferential diameter widens during the transport of molten material under pressure in such a way that a seal is formed between the radially inner surface of the nozzle body and the circumferential diameter of the connecting element,
**characterized in**
**that** the connecting element is rigidly connected to the first nozzle body (109), wherein the connecting region (113) is realized between the second nozzle body (111) and the connecting element (110).

2. The device according to Claim 1,
**characterized in**
**that** the connecting element (110) is realized in one piece.

3. A device for injection-moulding plastic parts, particularly a nozzle device (108) that can be inserted into a moulding tool, wherein the nozzle device comprises a first and a second nozzle body (109, 111), as well as a connecting element (110) for connecting the nozzle bodies, wherein the nozzle bodies and the connecting element respectively feature a supply line for molten material such that the molten material can be transported from the second nozzle body (111) into the first nozzle body (109) via the connecting element, wherein the first nozzle body features at least one supply channel for injecting the molten material into a mould cavity of the moulding tool, wherein the connecting element is connected to the nozzle bodies in such a way that a relative movement of the nozzle bodies is possible in the direction of a longitudinal axis of the nozzle bodies, wherein a connecting region (113) between a nozzle body and the connecting element is realized in such a way that the connecting region is self-sealing, wherein the connecting element (110) forms a radial sealing wall of the supply line that can exert a sealing force upon the radially inner surface of the nozzle body (111), wherein the sealing wall is realized in the form of a thin wall that can adapt a sealing effect to the pressure conditions in the supply line, wherein the radial sealing wall is realized in the form of a membrane between the supply line of the nozzle body and a circumferential diameter of the connecting element, and wherein the circumferential diameter widens during the transport of molten material under pressure in such a way that a seal is formed between the radially inner surface of the nozzle body and the circumferential diameter of the connecting element,
**characterized in**
**that** the connecting element is formed by the first nozzle body, wherein the connecting region (113) is realized between the second nozzle body (111) and the connecting element (110).

4. The device according to one of the preceding claims,
**characterized in**
**that** the radially outer surface of the connecting element (110) and the radially inner surface of the nozzle body (111) form a seal in the connecting region (113).

## Revendications

1. Dispositif d'injection directe sur des pièces moulées en matière plastique, notamment un dispositif de buses (108) qui sont insérables dans un moule de formage, le dispositif de buses comprenant un premier et un deuxième corps de buse (109, 111) ainsi qu'un élément de liaison (110) pour la liaison des corps de buse, les corps de buse et l'élément de liaison comportant chacun un conduit d'alimentation de matière en fusion, de telle sorte que la matière en fusion du deuxième corps de buse (111) puisse être transportée par l'intermédiaire de l'élément de liaison dans le premier corps de buse (109), le premier corps de buse comportant au moins un canal d'alimentation pour l'injection de la matière en fusion dans une cavité de moule du moule de formage et l'élément de liaison étant relié avec les corps de buses de telle sorte qu'un déplacement relatif des corps de buses dans la direction d'un axe longitudinal des corps de buses soit rendu possible, une zone de liaison (113) entre un corps de buse et l'élément de liaison étant conçue de sorte que la zone de liaison soit autoétanchéifiante, l'élément de liaison (110) formant une paroi d'étanchéité radiale du conduit d'alimentation, qui est susceptible d'exercer une force d'étanchéité sur la surface interne radiale du corps de buse (111), la paroi d'étanchéité étant conçue sous la forme d'une paroi mince capable d'adapter un effet d'étanchéité aux rapports de pression régnant dans le conduit d'alimentation, la paroi d'étanchéité radiale étant conçue à la manière d'une membrane entre le conduit d'alimentation du corps de buse et un diamètre périphérique de l'élément de liaison, lors d'un transport de matière en fusion sous pression, le diamètre périphérique pouvant s'élargir sous la pression de sorte qu'une étanchéité entre la surface interne radiale du corps de buse et le diamètre périphérique de l'élément de liaison soit créée, **caractérisé en ce que** l'élément de liaison est fixement relié avec le premier corps de buse (109), la zone de liaison (113) entre le deuxième corps de buse (111) et l'élément de liaison (110) étant créée.

2. Dispositif selon la revendication 1, **caractérisé en ce que** l'élément de liaison (110) est conçu en monobloc.

3. Dispositif d'injection directe sur des pièces moulées en matière plastique, notamment un dispositif de buses (108) qui sont insérables dans un moule de formage, le dispositif de buses comprenant un premier et un deuxième corps de buse (109, 111) ainsi qu'un élément de liaison (110) pour la liaison des corps de buse, les corps de buse et l'élément de liaison comportant chacun un conduit d'alimentation de matière en fusion, de telle sorte que la matière en fusion du deuxième corps de buse (111) puisse être transportée par l'intermédiaire de l'élément de liaison dans le premier corps de buse (109), le premier corps de buse comportant au moins un canal d'alimentation pour l'injection de la matière en fusion dans une cavité de moule du moule de formage et l'élément de liaison étant relié avec les corps de buses de telle sorte qu'un déplacement relatif des corps de buses dans la direction d'un axe longitudinal des corps de buses soit rendu possible, une zone de liaison (113) entre un corps de buse et l'élément de liaison étant conçue de sorte que la zone de liaison soit autoétanchéifiante, l'élément de liaison (110) formant une paroi d'étanchéité radiale du conduit d'alimentation, qui est susceptible d'exercer une force d'étanchéité sur la surface interne radiale du corps de buse (111), la paroi d'étanchéité étant conçue sous la forme d'une paroi mince capable d'adapter un effet d'étanchéité aux rapports de pression régnant dans le conduit d'alimentation, la paroi d'étanchéité radiale étant conçue à la manière d'une membrane entre le conduit d'alimentation du corps de buse et un diamètre périphérique de l'élément de liaison, lors d'un transport de matière en fusion sous pression, le diamètre périphérique pouvant s'élargir sous la pression de sorte qu'une étanchéité entre la surface interne radiale du corps de buse et le diamètre périphérique de l'élément de liaison soit créée, **caractérisé en ce que** l'élément de liaison est formé par le premier corps de buse (109), la zone de liaison (113) entre le deuxième corps de buse (111) et l'élément de liaison (110) étant créée.

4. Dispositif selon l'une quelconque des revendications précédentes, **caractérisé en ce que** dans la zone de liaison (113), une surface extérieure radiale de l'élément de liaison (110) et une surface intérieure radiale d'un corps de buse (111) forment une garniture d'étanchéité.
